Europäisches Patentamt

(19) European Patent Office

Office européen des brevets

(11) Publication number: **0 314 525**
A2

# (12) EUROPEAN PATENT APPLICATION

(21) Application number: 88310233.7

(22) Date of filing: 31.10.88

(51) Int. Cl.⁴: **G 01 N 33/49**
G 01 N 35/00

(30) Priority: 30.10.87 US 114869

(43) Date of publication of application:
03.05.89 Bulletin 89/18

(84) Designated Contracting States: DE ES FR GB IT

(71) Applicant: **Mak, Erwin A.**
**6 Les Peupliers**
**Laval-sur-le Lac Quebec (CA)**

(72) Inventor: **Mak, Erwin A.**
**6 Les Peupliers**
**Laval-sur-le Lac Quebec (CA)**

(74) Representative: **Leale, Robin George et al**
**FRANK B. DEHN & CO. Imperial House 15-19 Kingsway**
**London WC2B 6UZ (GB)**

(54) **Automatic blood serum analyzer.**

(57) An automatic blood analyzer is described which is capable of simultaneously carrying out a large number of different tests on a single blood serum sample. The novel device comprises: (a) a movable elongate holders (11) having a row of equally spaced cavities (31) for receiving cuvettes, the location of each said cavity in the row being indicative of a particular one of said plurality of different tests to be carried out, and said holder also having a holding cavity(32) for a serum cup, (b) a sampling station for transferring predetermined amounts of serum from the serum cup to cuvettes in the cavities, said sampling station including conveyor means (27,29) for moving each said holder stepwise longitidinally, transfer means for removing the serum cup from the holder and retaining it while the holder moves stepwise and a sampling tube (84) adapted to lower the top thereof into said serum cup, withdraw a predetermined amount of blood serum from the cup and transfer and deposit the sample in a cuvette in said holder, (c) incubator means including conveyor means (28) for receiving cuvettes holders from the sampling station and moving them laterally through the incubator and means (20) for injecting chemical reagents into the cuvettes at predetermined location in the incubator, and (d) a spectrophotometer station for receiving individual holders from the incubator conveyor, retaining the cuvette holder and simultaneously measuring the amounts of given substances in each cuvette present in the holder.

FIG. 3

**Description**

## Automatic Blood Serum Analyzer

This invention relates to a blood serum analyzer, and more particularly, to an analyzer in which a plurality, e.g. as many as eighteen, different tests may be carried out simultaneously on a single blood serum sample.

It has been known for many years to analyze blood serum samples by measuring the optical density of the samples. This is done by directing a light beam from a light source through the sample fluid, receiving the light from the source after it has passed through the sample and generating an electrical output proportional to the optical density of the sample. Typically the sample of blood plasma is mixed with a suitable reagent and heated under controlled temperatures prior to measuring the optical density. One such device for the above purpose is described in Breda et al. Canadian Patent Number 1,184,781, issued April 2, 1985, in which a plurality of plasma samples may be optically measured simultaneously.

It is common practice in blood analyzing devices to have a large number of test samples mounted in a circular test tray, as shown in Catarious et al, U.S. Patent No. 3,969,079, issued July 13, 1976. However, with such systems normally only one test procedure is conducted on all test samples in the test tray. In other words, each test sample is from a different patient and only a specific test for different patients can be carried out at one time. This means that when it is necessary to perform a large number of tests for a single patient, the only alternatives are to either wait for a large number of samples to be collected for each test required or to tie up the machine to run only one sample in each loading of the machine. The above patent shows a rather complex system for testing two samples simultaneously, but there is no suggestion of being able to conduct a large number of tests simultaneously on a single blood sample.

It would be highly desirable to have an automatic blood analyzer capable of conducting simultaneously a large number of tests on a blood serum sample for an individual patient.

According to the present conditions there is provided a blood serum analyzer for simultaenously conducting a plurality of different analyses on a single blood serum sample, comprising:

(a) a movable elongate holder having a row of equally spaced cavities for receiving cuvettes, the location of each said cavity in the row being indicative of a particular one of said plurality of different tests to be carried out, and said holder also having a holding cavity for a serum cup,

(b) a sampling station for transferring predetermined amounts of serum from the serum cup to cuvettes in the cavities, said sampling station including conveyor means for moving each said holder stepwise longitudinally, transfer means for removing the serum cup from the holder and retaining it while the holder moves stepwise and a sampling tube adapted to lower the tip thereof into said serum cup, withdraw a predetermined amount of blood serum from the cup and transfer and deposit the sample in a cuvette in said holder,

(c) incubator means including conveyor means for receiving cuvette holders from the sampling station and moving them laterally through the incubator and means for injecting chemical reagents into the cuvettes at predetermined location in the incubator, and

(d) a spectrophotometer station for receiving individual holders from the incubator conveyor, retaining the cuvette holder and simultaneously measuring the amounts of given substances in each cuvette present in the holder.

Thus a preferred form of the invention is a blood analyzer for simultaneously conducting a plurality of different tests on a single blood serum sample, i.e. a blood serum sample from an individual patient. The device comprises a movable elongate block or holder having a row of equally spaced cavities for receiving test tubes or cuvettes. The location of each cavity in the row is indicative of a particular one of the plurality of different tests to be carried out and the holder also has a separate cavity or holding means for a serum cup.

Each sample holder is transported on a conveyor step wise, longitudinally through a sampling station for transferring predetermined amounts of blood from the serum cup to cuvettes placed in one or more of the holder cavities. The sampling station includes a transfer arm for removing the serum cup from the holder and retaining it while the holder moves stepwise past the serum cup and a sampling tube lowers the tip thereof into the serum cup, withdraws a predetermined amount of blood serum from the cup and transfers and deposits this sample into the cuvettes in the holder. After the cuvettes in the holder have received serum samples in the above manner, the holder is transferred to a further conveyor which moves the holder laterally. In this manner, the holder is carried through an incubator where it is heated under controlled conditions. While the holder is within the incubator, suitable test reagents are injected into the cuvettes by means of injectors passing through the top of the incubator. These injectors are at predetermined locations along the length of the incubator, with the location of each injector along the incubator length determining the residence time of each cuvette within the incubator following injection of the test reagent. At the end of the incubator, each holder is transferred longitudinally into a spectrophotometer station in which the optical densities of all samples in the holder are measured simultaneously.

According to a preferred feature, the cuvette holder has cavities for a considerable number of cuvettes, e.g. as many as fourteen. It has been found to be particularly advantageous to utilize cuvettes of rectangular cross-section which are mounted in corresponding rectangular cavities. It is also preferable to include as part of the holder a machine-readable code, e.g. a bar-code sticker, corresponding to an individual patient identification and requisition. This information is read at an identification station normally located prior to the sampling station and the patient information is stored for future use.

The sample holders for individual patients are typically placed on an input accumulator which is a small conveyor adapted to move in a lateral direction as many as nineteen individual holders. This input accumulator automatically feeds the individual holders sequentially to the sampling station conveyor.

The sampling station includes a conveyor which moves each holder stepwise in a longitudinal direction. It also includes a bar-code reader and a detector for detecting the presence of cuvettes in the cavities and thereby determining the tests required. This information is fed to a central processor which then controls the injection of blood serum from the serum cup into the cuvettes and the injection of test reagents into the cuvettes within the incubator.

As the holder moves longitudinally through the sampling station, it is first engaged by a serum cup transfer device in the form of a pivotal arm with a grasping device on the end thereof for holding the serum cup. This transfer arm removes the serum cup from the holder and retains it in a position immediately adjacent to the cuvette holder. The holder then moves stepwise past the serum cup and, as each cuvette presents itself, a serum sampling tube removes a predetermined volume of serum from the cup and transfers it to the cuvette. This sampling tube is a plastic tube with a tip and is vertically mounted on an arm actuated by a multi-lobe cam for carrying out the sequence of movements required for transferring the serum samples from the cup to the cuvettes. The sampling tube is connected to a serum pump adapted to draw programmed amounts of serum into the sampling tube and then discharge the serum into a cuvette. The serum pump is preferably in the form of a piston pump or syringe driven by a step motor. This serum pump can typically draw and discharge from about 2 µl to about 50 µl of serum and also for distributing water required for calibration.

After the last cuvette has received its required volume of serum in the sampling station, the cuvette holder is transferred longitudinally onto a conveyor which moves the holder laterally. On this conveyor, the holder is carried laterally into the incubator which comprises a heated, insulated chamber. Extending through holes in the top of the incubator are a series of injector needles for injecting chemical reagents into the cuvettes being carried through the incubator. These injector needles move vertically up and down and are at different locations throughout the flow path of the conveyor through the incubator with the locations of the injector needles along the flow path of the conveyor determining the residence of each cuvette within the incubator after having received the chemical reagent. Each injector needle is connected via a tube to a reagent pump which pumps the reagent from individual reagent containers.

The incubator also preferably includes a series of air injector needles, each air needle being aligned with and immediately downstream of each reagent injector needle. These air needles move up and down through holes in the incubator top in the same manner as the reagent needles and serve to mix the serum and reagent in each cuvette.

At the end of the incubator, the holder is transferred onto a conveyor for moving it longitudinally and this conveyor moves the holder into a spectrophotometer station. The spectrophotometer has one test channel corresponding to each cuvette holder cavity and one reference channel. It preferably comprises a single light source adapted to feed light into a fiber optics bundle that branches into a leg for each of the above channels and preferably includes optical lenses and filters for directing from each of the above mentioned legs a light beam of predetermined wavelength laterally through each cuvette and blood serum sample to be analyzed and then focusing onto a photodetector which transforms the light received into an electric signal. According to a particularly preferred feature, the spectrophotometer has a maximum of fourteen test channels and one reference channel. The spectrophotometer also preferably includes an indexing device for fixing the location of each holder during readings in order to precisely maintain the apertures in the holder in line with the optical axis. It also preferably includes an ejector means for ejecting a test tube holder from the spectrophotometer after the readings are taken. These may then be stored in an output accumulator.

An embodiment of the invention will now be described by way of example and with reference to the accompanying drawings, in which:-

Fig. 1 is a perspective view of the complete analyzer;

Fig. 2 is a front elevation of the analyzer;

Fig. 3 is a schematic plan view of the analyzer;

Fig. 4 is a side elevation of the holder;

Fig. 5 is an end elevation of the holder;

Fig. 6 is a plan view of the holder;

Fig. 7 is a bottom view of the holder;

Fig. 8 is a side elevation of the cuvette;

Fig. 9 is a cross-section of the cuvette along line IX-IX;

Fig. 10 is a plan view of the sampling mechanism;

Fig. 11 is a side elevation of the sampling mechanism;

Fig. 12 is a side elevation of the sampling tip actuator;

Fig. 13 is a plan view of the sampling tip actuator;

Fig. 14 is a plan view of the serum pump;

Fig. 15 is a side elevation of the serum pump;

Fig. 16 is a side elevation of the incubator;

Fig. 17 is an end elevation of the incubator;

Fig. 18 is a plan view of the reagent pump;

Fig. 19 is a side elevation of the reagent pump;

Fig. 20 is a plan view of the spectrophotometer;

Fig. 21 is a side elevation of the spectrophotometer;

Fig. 22 is a side elevation of th filter assembly;

Fig. 23 is an exploded view in partial section of the filter assembly, and

Fig. 24 is an end elevation of the spectrophotometer.

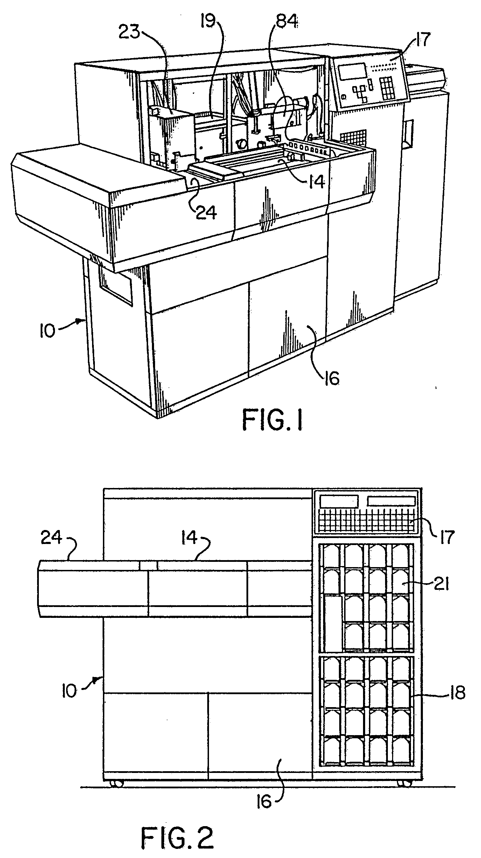

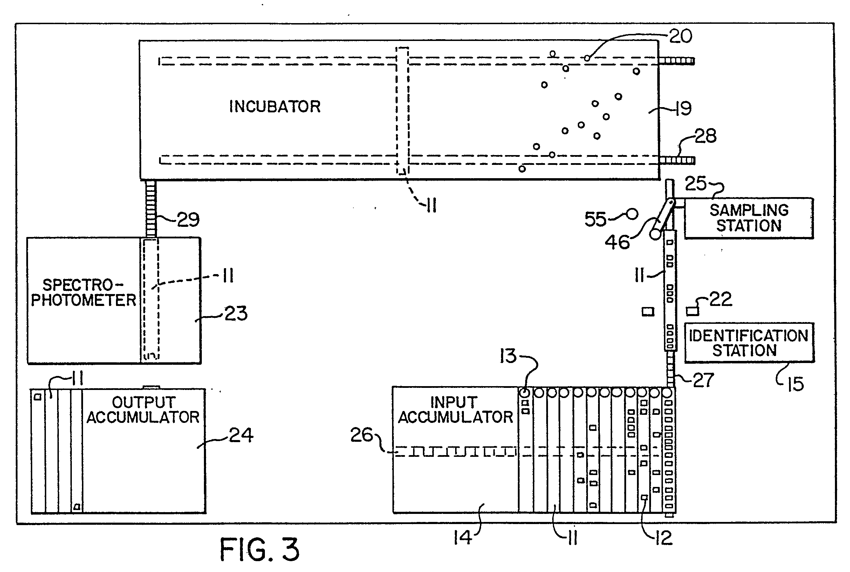

The general arrangement of the analyzer can be seen in Figures 1-3. It is built into a housing 10 which is sufficiently small to be transported fully assembled through hospital doorways. This housing has a control panel 17, a reagent bottle compartment 18 and doors 16 for waste disposal. The main working area is a horizontal flow path as shown in Figure 3. This includes an input accumulator 14 having a conveyor 26 on which are arranged holders 11 containing cuvettes 12 and a serum cup 13. The holders 11 are transferred from the input accumulator onto a conveyor 27 where they are carried past the identification station 15 and cuvette detector device 22 to the sampling station 25.

After the serum samples have been injected into the cuvettes in sampling station 25, the holders 11 are transferred to a conveyor 28 in the incubator 19 where reagents are injected into the cuvettes from reagent bottles 21 through reagent needles 20.

From the incubator 19, the holders 11 are transferred sequentially via conveyor 29 to the spectrophotometer 23 where optical densities are measured and finally the holders 11 are transferred to an output accumulator 24.

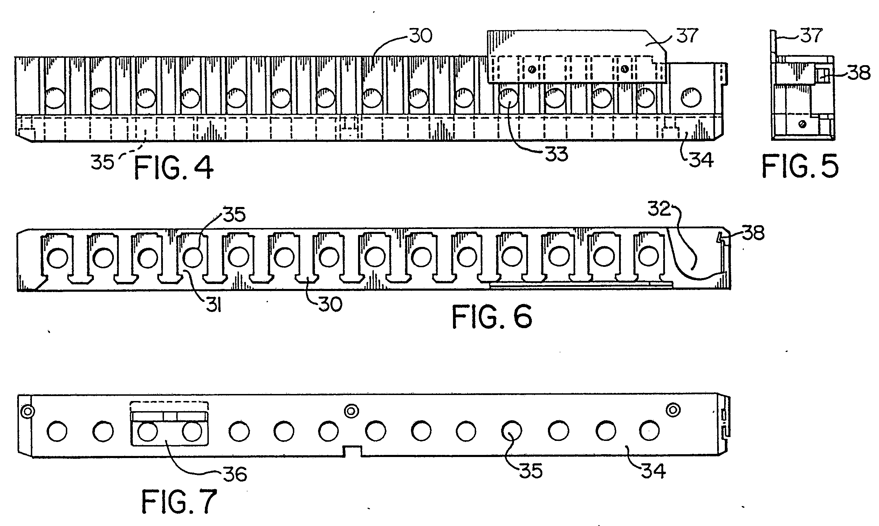

Looking now at the individual components of the device in greater detail, Figures 4 to 7 show details of the cuvette holder. It comprises a casting or extrusion 30 having rectangular pockets or openings 31 for holding cuvettes and a circular cavity 32 with a spring 38 for holding a serum cup. The rectangular cavities 31 are open to one side and have holes 33 on the opposite side to permit light to pass through the cuvettes in the spectrophotometer. The bottom of the casting or extrusion is closed by a bottom plate 34 having ventilation holes 35 to accelerate its stabilization to the temperature of the incubator. The bottom plate 34 also has a slot or indentation 36 which engages conveyor fingers for precise movement of the holder longitudinally along conveyor chains 27 and 29. Finally, the holder includes a projecting flag 37 for a bar-code sticker. A particularly preferred holder includes fourteen rectangular cavities and is made from aluminum alloy with a black anodized finish to minimize light reflection in the spectrophotometer. A typical holder has a width of 0.75 inch, a height of 1.0 inch and a length of 8.5 inches.

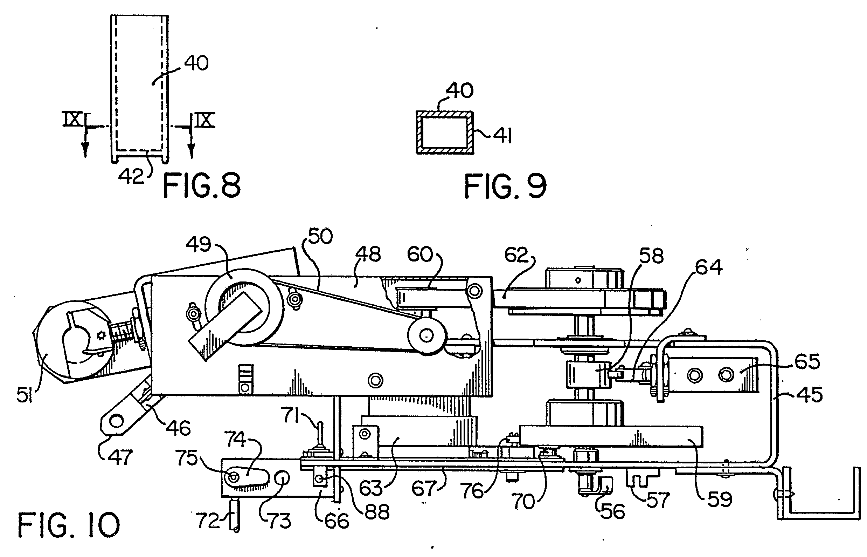

The cuvette, as shown in Figures 8 and 9, is rectangular with side walls 40 and 41 and a recessed bottom wall 42. These are small transparent containers preferably made of virgin polystyrene with specific optical tolerances at different ranges of wavelengths. A typical cuvette has a height of 32 mm with rectangular dimensions of 12 mm by 9 mm. The walls have a uniform thickness of 1 mm.

The cuvette detector device 22 is an optical sensor having a light beam passing through the holes 33 of holder 11. If the light beam passing through a hole 33 detects a cuvette, then a signal is generated indicating that the test represented by the presence of the cuvette is to be carried out. Thus, the required amount of serum is deposited in the cuvette and the required amount of the required reagent is injected into the cuvette at the required location in the incubator.

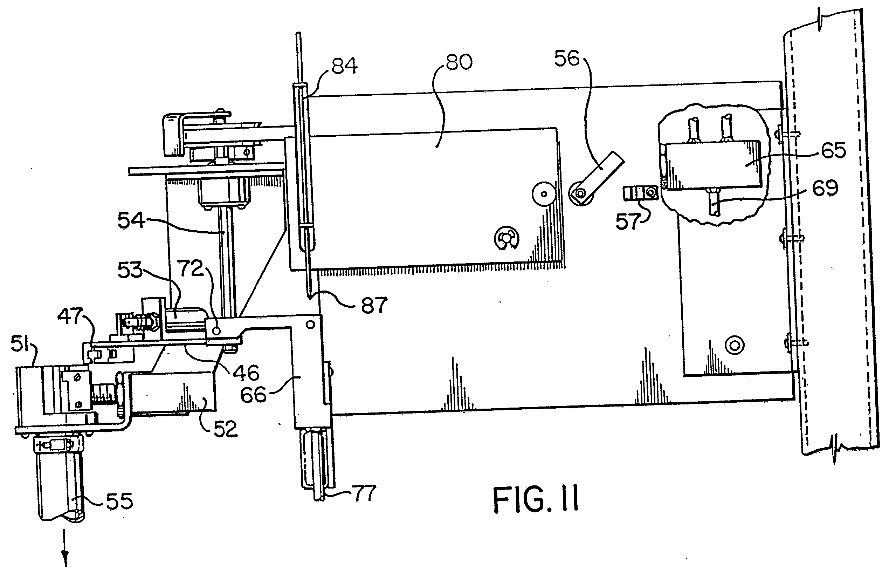

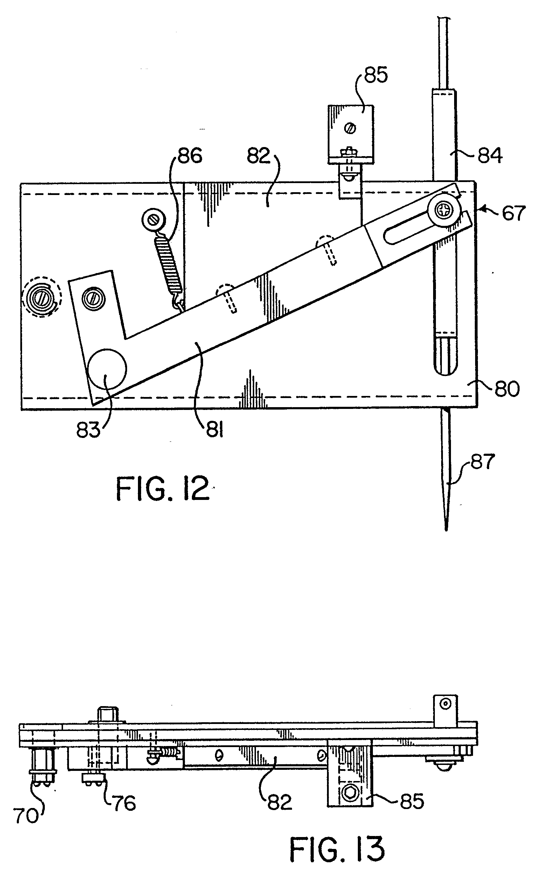

The sampling mechanism is shown in Figures 10 to 13. This device includes a frame 45 with a support plate 48 for carrying a serum cup actuator assembly. This assembly comprises a pivotal arm 46 with a cup holding mechanism 47 on the outer end thereof actuated by a solenoid 53. It also includes a cup catcher assembly 51 actuated by a solenoid 52. Arm 46 is mounted on a pivot shaft 54 rotated by means of pulley 49 and belt 50.

When a holder 11 moves into the location beneath bridge member 66, the cup actuator arm 46 swings inwardly to grasp the serum cup and move it immediately to the left of the holder. At that point, a sampling needle 84 commences the procedure of transferring serum from the serum cup being held by holder 47 into cuvettes contained in cavities in the holder moving stepwise past the station.

When all cuvettes in the holder have received a serum sample, the arm 46 and serum cup swings outwardly to a location directly above a waste discharge tube 55 where the cup is held by catcher assembly 51. In this location, the serum in the cup may, if desired, be used for electrolyte tests. When the serum is no longer required, the catcher assembly 51 is released and the entire cup is discharged to waste through tube 55.

The sampling needle is supported on an actuator slide block 80 and this slide block moves laterally supported by a bracket 85. It also includes a pivotal arm 81 for vertical movement of the sampling needle, this arm having a shoulder stud 83 and a spring member 86 which biases arm 81 against an upper limit detector 82. The sampling mechanism is operated primarily by means of a multi-lobe cam 59. It is driven on a shaft from motor 63 via pulley 60, timing belt 62 and pulley 61.

The multi-lobe cam 59 has an outer cam path which actuates follower 70 and an inner cam path which actuates a follower 76. One of these followers moves the slide block 80 backwards and forwards while the other moves the sampling needle 84 up and down so that the tip 87 thereof may engage the serum in the serum cup and also deposit the serum into the bottom of each cuvette.

The cam 58 actuates a follower 64 of a vacuum valve 65 in timed sequence with the activities of cam 59. The shaft also has a flag 56 which actuates an optical switch 57.

The bridge 66 includes three holes 73, 75 and 88 extending downwardly therethrough, and the sampling needle tip 87 enters each of these holes. Thus it passes through hole 75 to pick up a sample of serum, then passes through hole 73 to deposit the sample in a cuvette. The hole 88 is used for cleaning the tip 87.

A depression 74 in the top of bridge 66 surrounds hole 75 and a suction tube 72 also connects to hole 75. This tube 72 connects to waste through valve 65 and waste line 69. The depression 74 and suction tube 72 serve as a venturi for collecting waste serum and water when the tip 87 is flushed between each cuvette.

The hole 88 is connected to a wash line 71 through which water from a water bottle enters to wash the outer surface of the tip within hole 88. The bottom end of hole 88 is connected to suction line 77 which goes to waste via vacuum valve 65. This system permits the sampling needle tip 87 to wash and dry itself between each patient sample.

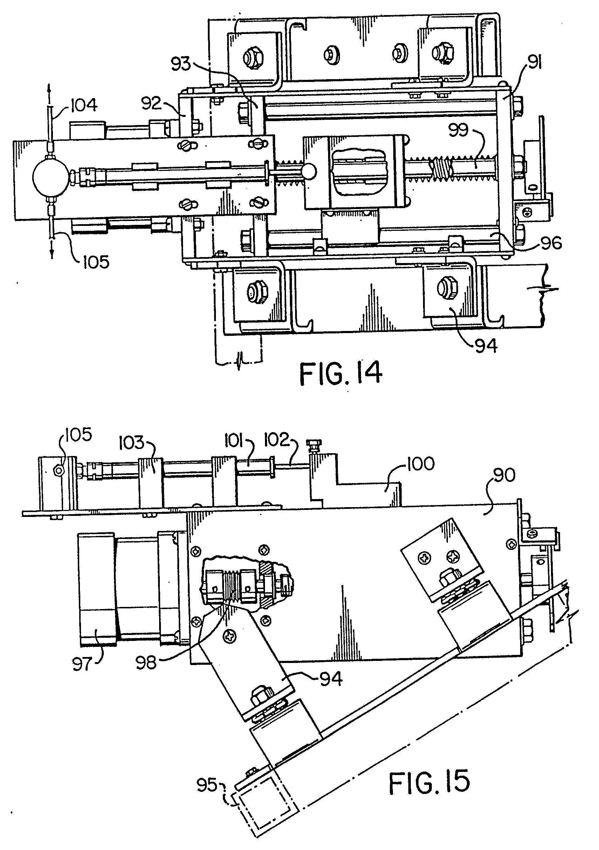

The sampling needle 84 functions as a suction and discharge tube and it is operated by the serum pump shown in Figures 14 and 15. It includes an assembly having side plates 90, end plates 91 and 92 and an intermediate cross plate 93 between the side walls. This support assembly is mounted by brackets 94 to a shelf frame 95.

The plates 91 and 93 have rods 96 extending therebetween and also have a leadscrew 99 mounted in bearings in the plates 91 and 93 driven by a coupling 98 and a motor 97. This leadscrew 99 drives an actuator block 100 which is connected to a piston 102 in a cylinder 101 mounted in mounting blocks 103. The outer end of cylinder 101 is connected to a valve block having a tube 104 going to a water bottle and a tube 105 connected to sampling needle 84.

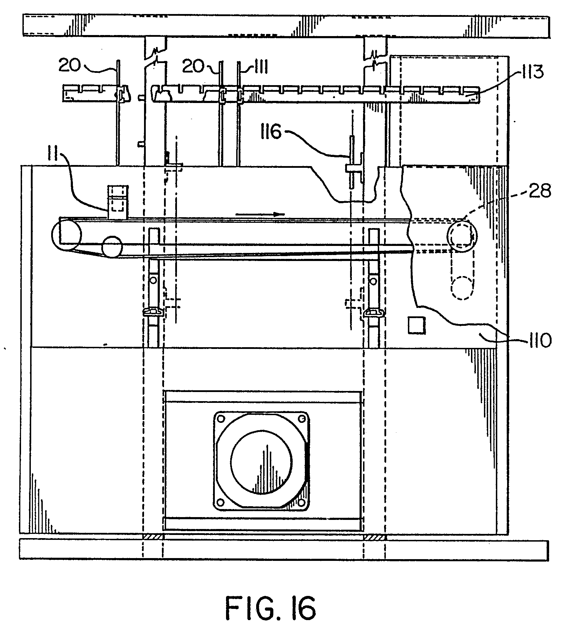

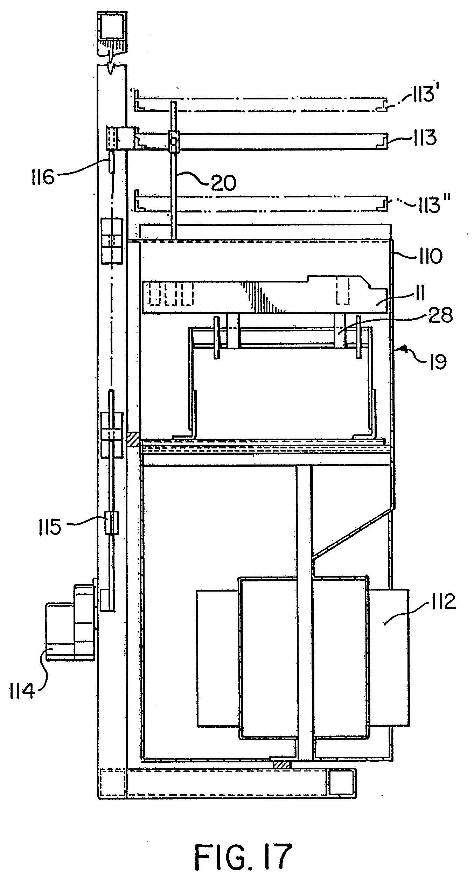

The incubator 19 is shown in Figures 16 and 17 and comprises an insulated box 110 along the length of which passes a conveyor 28. This conveyor 28 moves cuvette holders 11 stepwise through the incubator. The top of the box 110 has a plurality of small holes through which reagent needles 20 and air needles 111 pass and the incubator is heated by means of heater 112.

The needles 20 and 111 are mounted on a support frame 113 which moves up and down between positions 113' and 113". This up and down movement is provided by means of a motor 114 and cam arrangement 115 which lifts and lowers the actuator rods 116 support frame 113. The needles 20 and 111 are arranged in pairs with each pair of reagent needle followed by air needle being in a row corresponding to the path of each cuvette through the incubator.

Thus, the frame 113 and needles 20 and 111 move up and down in timed sequence with the stepwise movement of conveyor 28. At a previously programmed location along the path through the conveyor, a particular reagent is deposited in a particular cuvette by means of a needle 20. In the next stepwise cycle of the system the corresponding air needle 111 enters the same cuvette and a gentle stream of air is delivered to mix the reagent and serum.

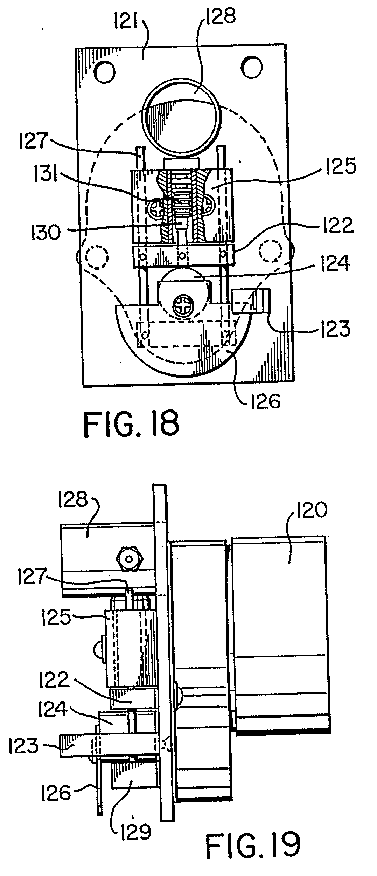

The pump used for pumping chemical reagent from each reagent bottle 21 into the cuvettes in the incubator is shown in some detail in Figures 18 and 19. The reagent pump is provided for each reagent bottle 21 and these pumps are mounted on a bulkhead directly behind the bottles 21. The reagent pump consists of a main support plate 121 having a synchronous motor assembly 120 connected to one side thereof and mounted to rotate a cam 124 and flag 126 which engages an optical switch 123, the flag and switch serving as a counter of pump strokes. The pump portion consists of a glass cylinder 131 of high precision bore with a piston 130 connected to connector plate 122 which moves along guide rods 127. The cylinder 131 is held firmly in place on plate 121 by means of retaining blocks 125. The outer end of cylinder 131 is connected to a valve member 128, this being a three way valve of very low dead volume for use in controlling flow between a prime cycle, an analyze cycle and a purge cycle. The volume of this pump is typically adjustable to 50 1 per stroke.

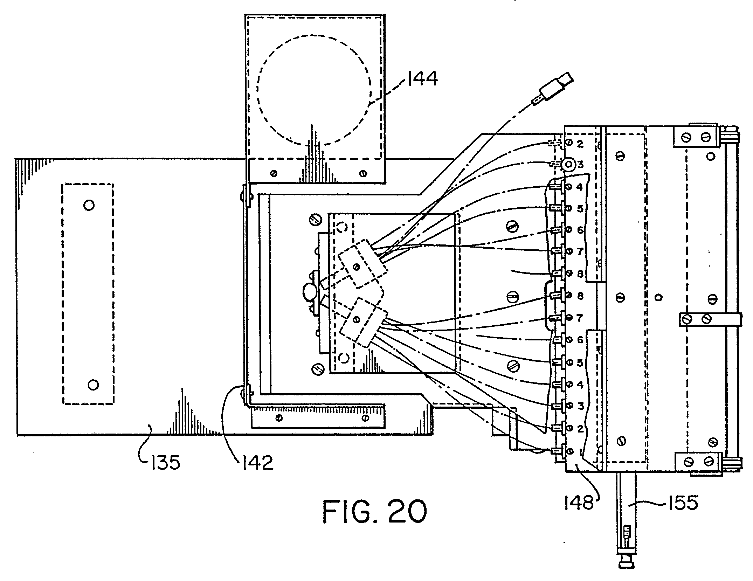

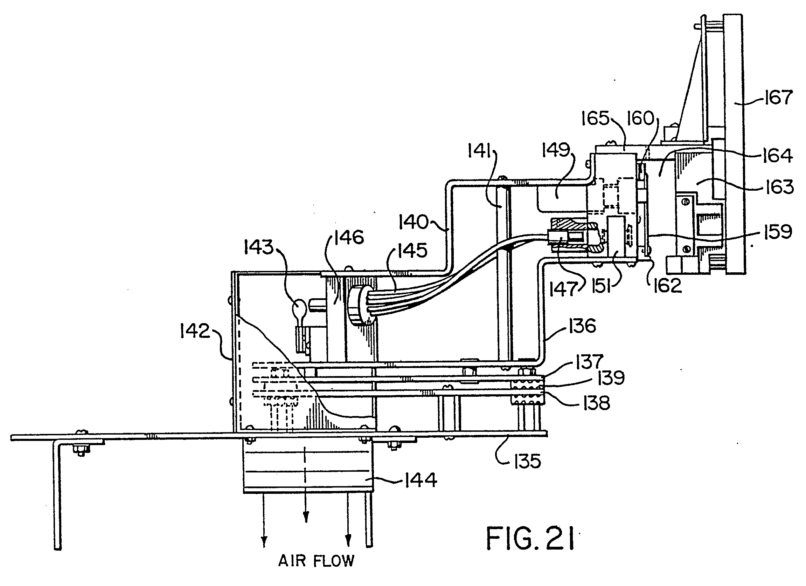

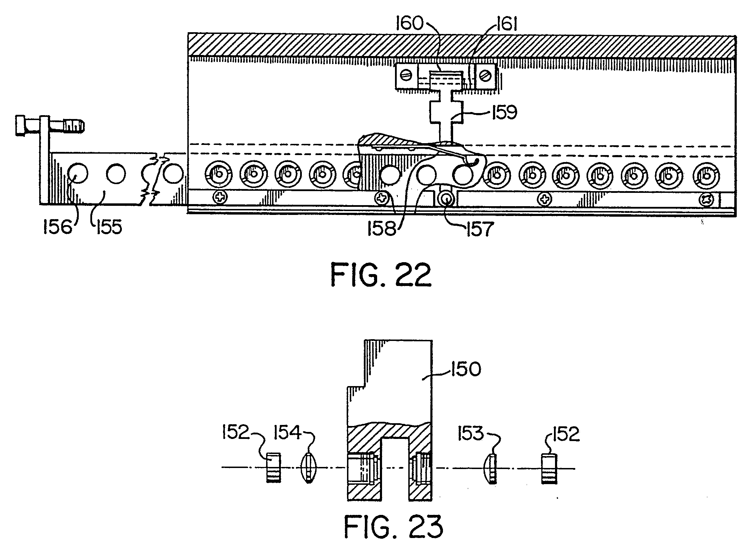

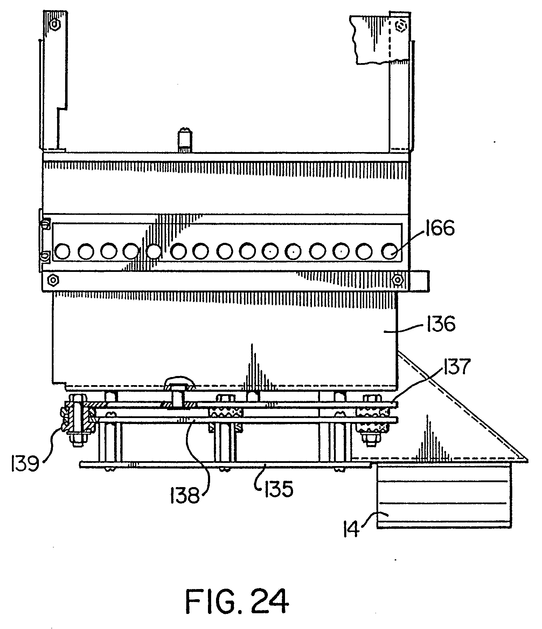

The spectrophotometer station is shown in Figures 20 to 24 and this includes a main mounting plate 135, a base plate 136, and a pair of intermediate plates 137 and 138 with vibration isolators 139 mounted therebetween. The assembly also includes a top plate 140, a post 141 and a plate 142 enclosing a lamp compartment. A single lamp 143 is used and this is preferably a 100 watt tungsten-halogen light. The light compartment is cooled by means of fan 144.

The output from light 143 is fed to two fiber optics bundles 145 mounted in a mounting block 146. Each fiber optics bundle preferably branches out into eight legs, one for each of fourteen test channels, one reference channel and one channel for an accumulator. The fiber optics branches have end caps 147 mounted in a fiber optics mounting bar 148. These connect with lens and filter assemblies, including a filter block 150 with a slot 151, a pair of mounting rings 152, a plano convex lens 153 and a bi-convex lens 154. A filter block assembly 155 containing filters 156 is mounted in the slot 151 such that the filters 156 are in alignment with the lenses 153, 154 and with the fiber optics end caps 147.

Adjacent the filter assembly is a block member 163 supported by a support plate 165 forming between block 163 and the filter assembly a passageway 164 for cuvette holders 11. This includes a lower guide bar 162 and a indexing finger 159 supported from a mounting block 160 by way of a hinge pin 161. The lower end of indexing finger 159 has a indexing wedge 157 which engages the slot in the side of the holder and the indexing finger 159 is also actuated by means of solenoid 149 to precisely locate the holder within the passageway 164. A further spring blade 158 may also be used which rides along the top of the holder to also assist in precisely locating it. Finally, the block 163 is provided with lenses and outlet ports 166 in alignment with each channel for light to exit for focusing onto photodetector 167 of known type.

Wires (not shown) convey signals from the photodetector to a central data processor of known type which provides for the overall coordination of the components of the device and for cooperation with peripheral means such as displays, printers, etc.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or prosecution of any divisional application based thereon. Furthermore the manner in which any of such features of the specification or claims are described or defined may be amended, broadened or otherwise modified in any manner which falls within the knowledge of a person skilled in the relevant art, for example so as to encompass, either implicitly or explicitly, equivalents or generalisations thereof.

**Claims**

1. A blood serum analyzer for simultaneously conducting a plurality of different analyses on a single blood serum sample, comprising:

(a) a movable elongate holder having a row of equally spaced cavities for receiving cuvettes, the location of each said cavity in the row being indicative of a particular one of said plurality of different tests to be carried out, and said holder also having a holding cavity for a serum cup,

(b) a sampling station for transferring predetermined amounts of serum from the serum cup to cuvettes in the cavities, said sampling station including conveyor means for moving each said holder stepwise longitudinally, transfer means for removing the serum cup from the holder and retaining it while the holder moves stepwise and a sampling tube adapted to lower the tip thereof into said serum cup, withdraw a predetermined amount of blood serum from the cup and transfer and deposit the sample in a cuvette in said holder,

(c) incubator means including conveyor means for receiving cuvette holders from the sampling station and moving them laterally through the incubator and means for injecting chemical reagents into the cuvettes at predetermined location in the incubator, and

(d) a spectrophotometer station for receiving individual holders from the incubator conveyor, retaining the cuvette holder and simultaneously measuring the amounts of given substances in each cuvette present in the holder.

2. A blood analyzer according to claim 1 wherein each cuvette holder includes a machine-readable code corresponding to an individual patient identification and requisition.

3. A blood analyzer according to claim 2 which includes an identification station for recording the information from the code.

4. A blood analyzer according to claim 3 which includes an identification station for detecting the presence of cuvettes in the holder cavities and thereby identifying the particular analyses to be performed.

5. A blood analyzer according to any preceding claim having a plurality of rectangular cavities to receive rectangular cuvettes.

6. A blood analyzer according to claim 5 wherein the holder comprises an aluminum block with said cavities.

7. A blood analyzer according to any preceding claim wherein the serum cup transfer means comprises a pivotal arm adapted to grasp the serum cup and remove it from the holder.

8. A blood analyzer according to claim 7 wherein said serum sampling tube is mounted on an arm actuated by a multi-lobe cam and is connected to a serum pump adapted to draw programmed amounts of serum into the sampling tube and then discharge the serum into a cuvette.

9. A blood analyzer according to claim 8 wherein the serum pump comprises a piston pump driven by a step motor.

10. A blood analyzer according to claim 9 wherein the serum pump can draw and discharge from $2\,\mu l$ to $50\,\mu l$ of serum.

11. A blood analyzer according to any preceding claim wherein the incubator comprises a heated, insulated chamber through which said conveyor may simultaneously carry a plurality of cuvette holders, with the reaction times for individual test tubes in each holder being determined by the location of the chemical reagent injector for each cuvette along the path of the conveyor.

12. A blood analyzer according to claim 11 wherein the incubator has a continuous capacity for from 1 to 19 cuvette holders.

13. A blood analyzer according to any preceding claim wherein the spectrophotometer has one test channel corresponding to each holder cavity and one reference channel and comprises a single light source adapted to feed light into a fiber optics bundle that branches into a leg for each said channel, optical lenses and filters for directing from each said leg a light beam of predetermined wavelength laterally through each cuvette and blood sample to be analyzed and then focussing onto a photodetector which transforms the light received into an electric signal.

14. A blood analyzer according to claim 13 wherein the spectrophotometer has a maximum of 14 test channels and one reference channel.

15. A blood analyzer according to claim 13 or 14 wherein the spectrophotometer includes indexing means for fixing the location of each holder during readings in order to precisely maintain the apertures in the holder in line with the optical axis.

16. A blood analyzer according to any of claims 13 to 15 including ejector means for ejecting a cuvette holder from the spectrophotometer after the readings are taken.

17. A blood analyzer according to any preceding claim which includes an input accumulator comprising a conveyor for holding a maximum of 19 cuvette holders and feeding these sequentially to said sampling station.

18. A blood analyzer according to claim 17 which also includes an output accumulator for receiving and holding tested cuvette holders from the spectrophotometer.

FIG.1

FIG.2

INCUBATOR

SAMPLING STATION

IDENTIFICATION STATION

INPUT ACCUMULATOR

SPECTRO-PHOTOMETER

OUTPUT ACCUMULATOR

FIG. 3

EP 0 314 525 A2

FIG. 4

FIG. 5

FIG. 6

FIG. 7

FIG. 9

FIG. 8

FIG. 10

FIG. II

EP 0 314 525 A2

FIG. 12

FIG. 13

FIG. 14

FIG. 15

FIG. 16

FIG. 17

FIG. 18

FIG. 19

FIG. 20

EP 0 314 525 A2

FIG. 21

FIG. 22

FIG. 23

EP 0 314 525 A2

FIG. 24